# EUROPEAN PATENT APPLICATION

(11) **EP 4 835 541 A1**
(43) Date of publication of application: **04.11.2026**
(21) Application number: 26171197.2
(22) Date of filing: 08.04.2026
(51) Int. Cl.: G02B 27/01

(54) **HEAD-UP DISPLAY ATTACHABLE TO NIGHT VISION DEVICES**

(30) Priority: 01.05.2025 US 202563798148 P
(71) Applicant: Wilcox Industries Corp., Newington, NH 03801 (US)
(72) Inventor: TEETZEL, James W., Newington (US); TURNER, Elliott S., Newington (US)
(74) Representative: FRKelly

(57) **Abstract**

A head-up display (HUD) system is used in connection with a viewing device having at least one monocular unit, and in preferred embodiments, with a binocular night vision device. The HUD system includes a mounting bracket subassembly removably attachable to the at least one monocular unit of the viewing device; a HUD subassembly including at least a waveguide, an image projector, and display control electronics. In embodiments, at least one user control and means for securely connecting the mounting bracket subassembly and the HUD subassembly are provided.

## Description

### CROSS REFERENCE TO RELATED APPLICATION

This application claims the priority benefit of U.S. Provisional Patent Application No. 63/798,148 filed May 1, 2025. The aforementioned application is incorporated herein by reference in its entirety.

### BACKGROUND

The present disclosure relates to a head-up display (HUD) system for use, e.g., with night vision devices (NVDs). Some modern NVD models are *smart,* including integrated software and features for HUD functionality. Older NVD technologies may not include these features, however, but are still valuable pieces of tactical equipment that could benefit from HUD technology. Therefore, there is a need for a technologically advanced HUD to be attached to and/or incorporated with older NVD equipment. While the illustrated preferred embodiment is described primarily by way of reference to NVDs, it will be recognized that the head-up display (HUD) system herein can be utilized to provide HUD functionality with viewing systems that employ all manner of other vision enhancement technologies.

### SUMMARY

In one aspect, a head-up display system for use in connection with a viewing device having at least one monocular unit is provided and includes a mounting bracket subassembly removably attachable to the at least one monocular unit of the viewing device; a HUD subassembly including at least a waveguide, an image projector, and display control electronics. In embodiments, at least one user control and means for securely connecting the mounting bracket subassembly and the HUD subassembly are provided.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of an exemplary HUD.
FIG. 2 is an isometric view of the HUD in use with NVG.
FIGS. 3 and 4 are partially exploded isometric views of a mounting bracket subassembly applied to the NVG and a HUD subassembly separated from the NVG, viewed generally from the left and right, respectively.
FIG. 5 is an isometric view of a mounting bracket subassembly applied to the NVG.
FIG. 6 is an exploded view of the mounting bracket subassembly separated from the NVG.
FIG. 7 is an isometric view of the HUD in use with the NVG, taken generally from above.
FIG. 8 is a rear view of the HUD in use with the NVG.
FIGS. 9A and 9B are exploded views of the HUD subassembly.
FIG. 10 is a left, external-facing side view of the HUD subassembly.
FIG. 11 is a top down view of the HUD subassembly.
FIG. 12 is a bottom up view of the HUD subassembly.
FIG. 13 is a rear view of the HUD subassembly.
FIG. 14 is a front view of the HUD subassembly.
FIG. 15 is a block diagram of the HUD subassembly coupled to a smart battery pack.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

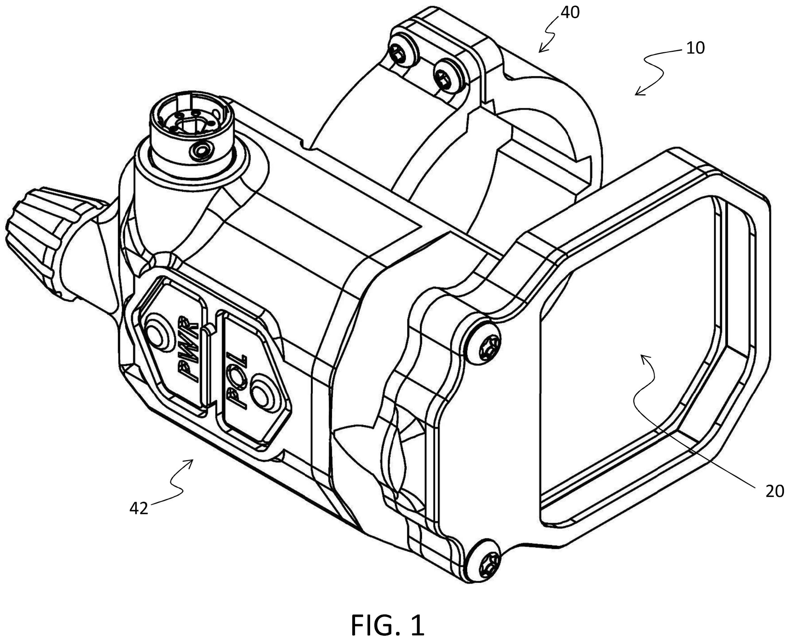

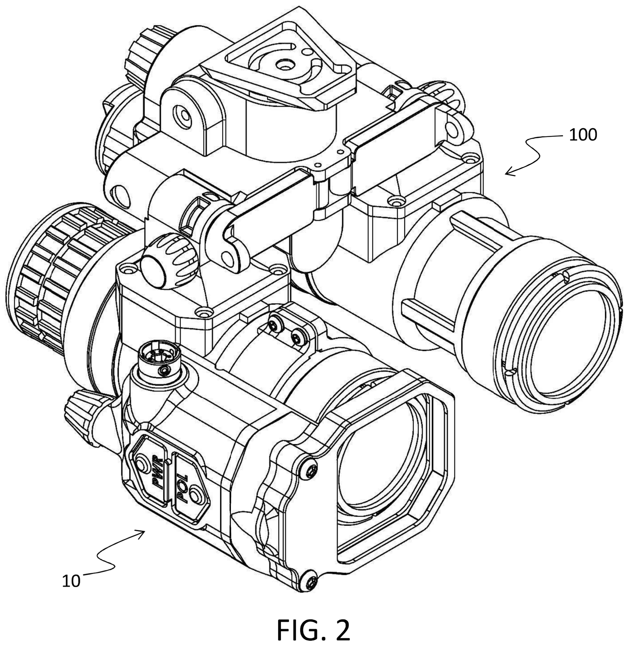

Referring to FIGS. 1-4, isometric views showing a head-up display (hereinafter, "HUD") system **10** are provided. The HUD system **10** includes mounting bracket subassembly **40,** which may comprise a clam type or split ring type bracket mechanism, and a HUD subassembly **42.** The mounting bracket subassembly **40** is designed to be removably attachable to a housing **112** of a monocular unit **110,** i.e., channel or pod, of night vision device (NVD) **100.** FIG. 1 is an isometric view of the HUD system **10** with the mounting bracket subassembly **40** and the HUD subassembly **42** attached to one another. FIG. 2 is an isometric view of the HUD system **10** applied to a night vision device (NVD) **100.** In embodiments as shown, the NVD **100** is a binocular night vision device comprising two monocular channels or pods **110** adjoined by a bridge assembly **130** coupling the units **110** and configured to attach the unit **100** to a helmet mount assembly. It is understood that the HUD system **10** may also be applied to a monocular NVD or other type of monocular or binocular viewing device, including optical devices, optoelectronic devices, electronic displays, thermal imaging systems, and other advanced vision technologies. The illustrated mounting bracket subassembly **40** is advantageously configured for coupling the HUD system **10** to an AN/PVS-3 1A BNVD night vision device (L3Harris Technologies, Inc., Melbourne, Florida, USA). It will be recognized that configurations adapted to secure the HUD system **10** to other viewing devices, including other NVDs, are also contemplated.

The HUD system **10** includes a waveguide **20** configured to display information to the user, such as compass or bearing information directions, navigation information, coordinates, waypoints, targeting information such as range to target and other information, 2D or 3D augmented reality (AR) markers, overlays, and other virtual information of graphics, sensor information including environmental and biological sensor information, information and/or messages from tactical software, and the like. The waveguide **20** is configured to be positioned between the eyepiece assembly **114** and the user's eye. Existing systems for combining image information from another source with an image captured or displayed by a viewing device are known, such as digital image fusion systems that require complex electronic integration, or clip-on imaging systems such as the Enhanced Clip-On Thermal Imager (ECOTI) (Safran Optics 1) which optically injects thermal imagery into the objective lens of a night vision device, thereby running the risk of image burn in on the phosphor screen of the night vision device. In contrast, the present development requires no modification of the NVD hardware and, because the waveguide displaying the HUD features is positioned downstream of the NVD, the NVD is not subjected to an additional external light source that can potentially lead to image burn in.

In embodiments, the displayed information is output from tactical software such as a geospatial infrastructure and military situation awareness application, such as that sold under the trademarks ANDROID TEAM AWARENESS KIT and ATAK, owned by the United States of America, as represented by the Secretary of the Air Force. In embodiments, the software is configured to output information to be displayed on the waveguide **20** including but not limited to information regarding navigation and position, spatial awareness, drone footage and control, terrain, weather, enemy activity and position, target information, equipment load, situational awareness information, sensor information, and the like.

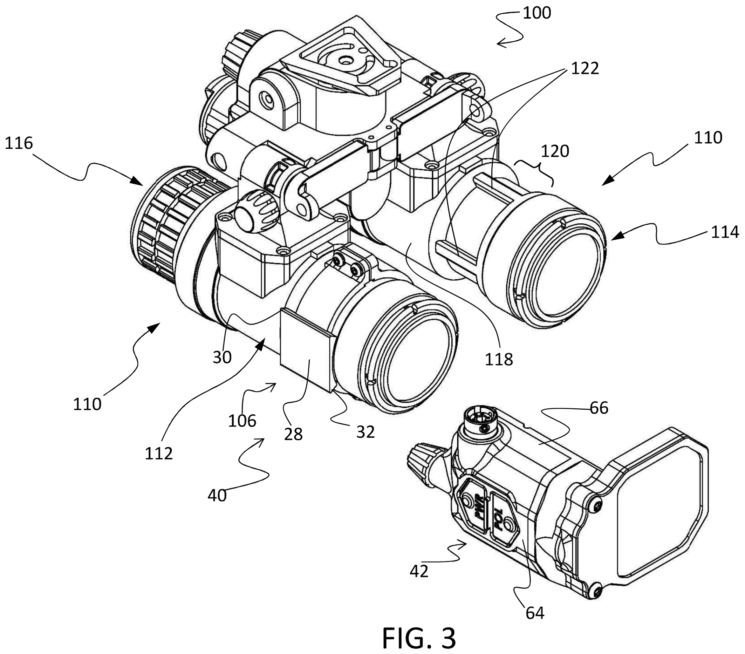

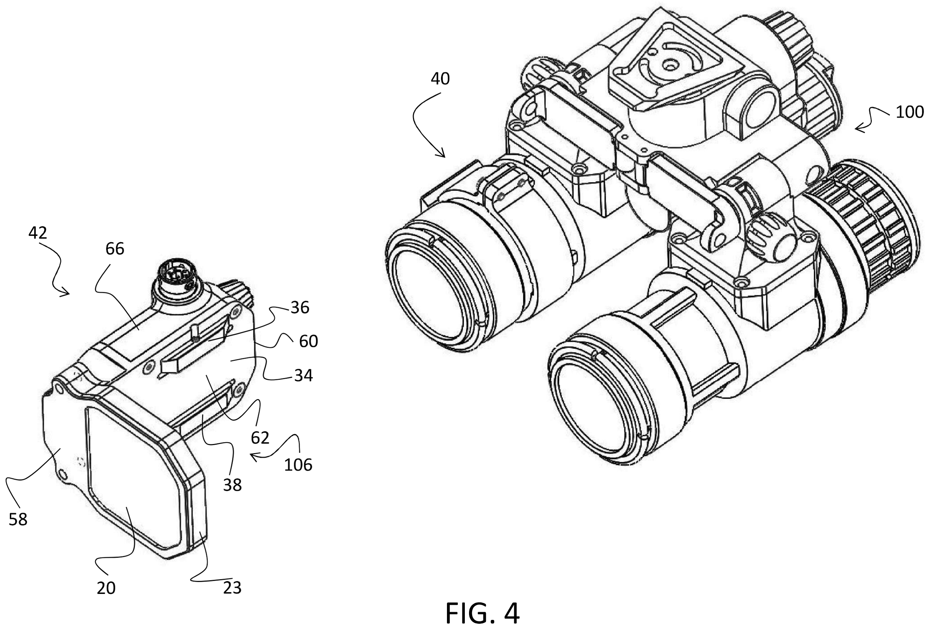

FIGS. 3 and 4 are isometric views of the mounting bracket subassembly **40** applied to the NVD **100** and the HUD subassembly **42** separated from one another. The HUD system **10** includes an attachment means **106** for attaching the mounting bracket subassembly **40** and the HUD subassembly **42.** In embodiments, the attachment means **106** includes a mounting shoe **28** such as a dovetail shoe with upper and lower edges **30, 32** on the mounting bracket subassembly **40** configured to be slidably received within a complementary channel **35** defined by a base portion **34** of a HUD chassis **44** and opposing slide rails **36, 38** disposed on the base portion **34.**

The mounting shoe **28** is secured in fixed position within the channel **35** by a dovetail screw **39** which passes through an opening **41** in the slide rail **36** and engages the shoe **28,** e.g., by engaging a complementary opening in the shoe **28** (not shown) or by bearing against the shoe **28.** Other mounting shoe configurations may include T-channel configurations, tongue-and-groove configurations, and others. In additional embodiments, the attachment means **106** may be configured to include other structures, such as coordinating magnets, clips, screws, adhesive, and the like.

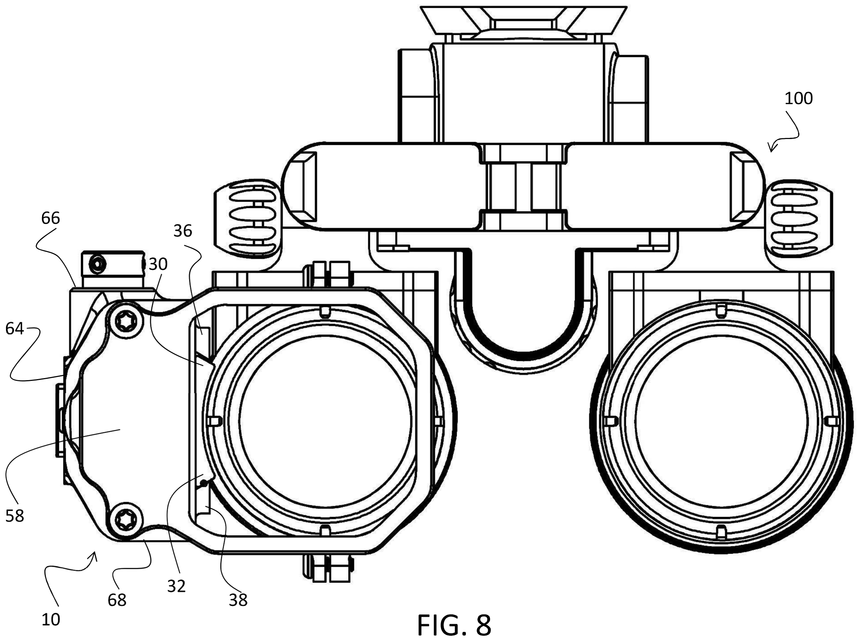

The HUD subassembly **42** includes a rear surface or side defined which is defined by a waveguide frame cover **58** and a front or forward facing surface **60.** An inward or NVD-facing side **62** is defined by the chassis base portion **34.** An external-facing side **64** is disposed opposite the NVD-facing side **62.** The HUD subassembly **42** also includes top **66** and bottom **68** surfaces (shown most clearly in FIGS. 8, 10, and 12-14). The HUD system **10** is shown herein attached to the left monocular unit **110** of the NVD **100.** Presenting the HUD image to the user's left eye may be preferred in most use cases, e.g., due to the prevalence of right-eye dominance in the general population. This configuration allows the dominant right eye to maintain an unobstructed primary view while the non-dominant left eye receives the supplemental information presented by the HUD system **10.** In embodiments, the HUD system **10** may be configured to be attached to the right monocular unit **110,** e.g., to accommodate users with left-eye dominance, or simply to suit individual user preference or specific operational requirements. In embodiments, the HUD system **10** may be configured to be selectively attached to either the left or right monocular unit **110.** For example, in the illustrated embodiment, the HUD system **10** can be inverted 180 degrees about the optical axis (relative to the orientation as illustrated) for attachment to the right monocular unit **110,** wherein the surface **66** becomes the bottom surface and the surface **68** becomes the top surface. In still further embodiments, dedicated left- and right-sided configurations can be provided, e.g., wherein a right-sided configuration is a mirror image of the left-sided unit as illustrated.

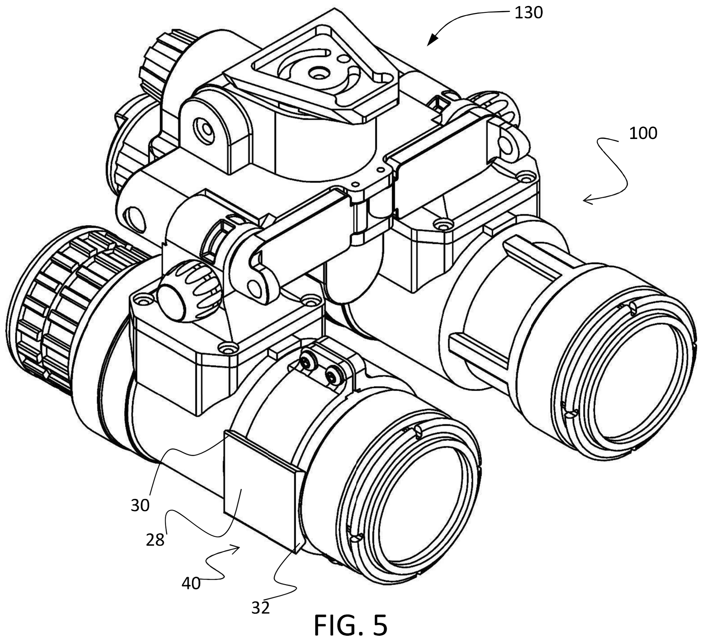

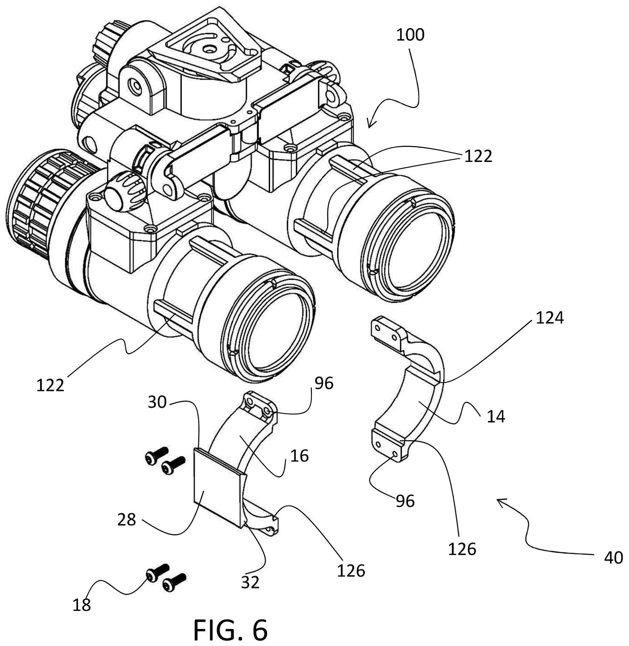

Referring to FIGS. 5 and 6, isometric views of the mounting bracket subassembly **40** are provided. Each NVD monocular unit **110** may include a monocular housing **112** defining a generally tubular structure having an ocular (eyepiece) assembly **114** at a proximal end thereof and an objective lens assembly **116** at a distal end thereof. An intensifier tube housing portion **118** is positioned intermediate the ocular lens assembly **114** and the objective lens assembly **116** and is configured to receive and retain an image intensifier tube therein. A housing segment **120** is further provided between the ocular lens assembly **114** and the intensifier tube housing portion **118.**

The mounting bracket subassembly **40** is configured to engage the housing segment **120.** In embodiments, the housing segment **120** includes one or more axially extending splines **122** (four in the illustrated embodiment) disposed along an external surface thereof. The splines **122** are configured to engage with complementary internal channels or grooves **124** formed on the first and second split ring clamping pieces **14, 16** to prevent rotation of the HUD system **10** when it is attached to a channel **110** of the NVD **100.** In embodiments, the mounting bracket subassembly **40** is configured to surround the segment **120** of a monocular unit housing **112.** In the illustrated embodiment wherein the mounting bracket subassembly **40** comprises a split ring structure formed of separable ring halves **14, 16,** each ring half may define one or more partial channels **126** at its mating surface such that when the ring halves **14, 16** are joined, the partial channels **126** cooperate to define a continuous channel dimensioned to receive the corresponding aligned spline **122.**

In other embodiments, the first and second bracket pieces **14, 16** are substituted by a single piece that is ratcheted to fit around the housing segment **115** or that possesses sufficient elasticity to open around the monocular unit housing **112** and then snap back together. In other embodiments for use with monocular unit housings **112** that do not have a generally circular cross-sectional shape, the mounting bracket subassembly **40** may be complementary in shape to match the shape of the monocular unit housings **112,** such as rectangular, rounded rectangular, or other geometric shape, or may otherwise adapt to the shape. The mounting shoe **28** is disposed on the second bracket piece **16.** It is understood that the *first* and *second* designations of the first and second bracket pieces **14, 16** are arbitrary. The mounting shoe **28** is generally disposed to face away from the NVD **100** because the HUD subassembly **42** will be attached thereto and there needs to be space for that HUD subassembly **42.** In embodiments, the first and second bracket pieces **14, 16** are attached with threaded fasteners **18** which pass through clearance openings **96** in one of the first and second bracket pieces **14, 16** and threadably engage aligned openings **97** in the other one of the first and second bracket pieces **14, 16.** In embodiments, first and second bracket pieces **14, 16** are attached by other fastener means, such as clips, clamps, or snaps, as would be understood by persons skilled in the art.

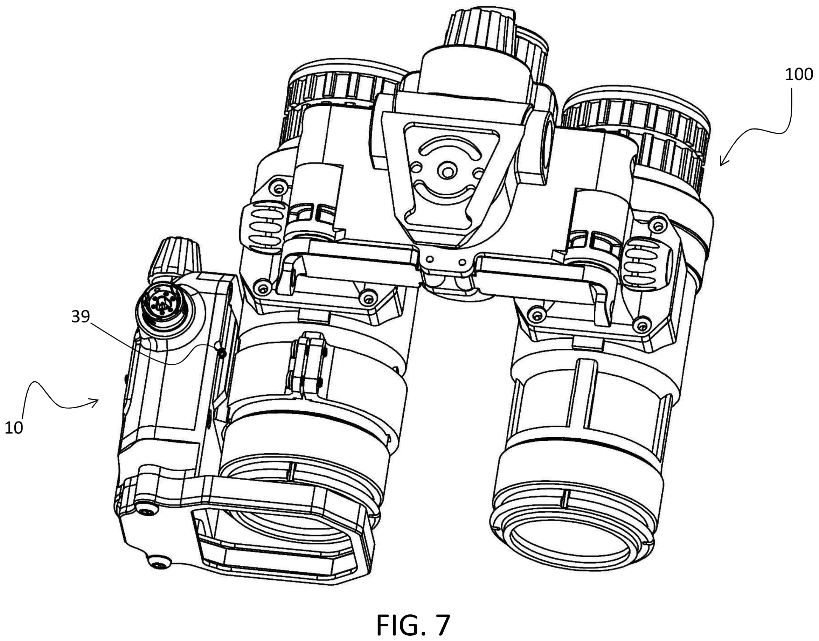

Referring to FIGS. 7 and 8, isometric and front views of the HUD system **10** applied to the NVD **100** are provided, respectively. As noted above, FIG. 8 provides a clear illustration of the mounting shoe upper and lower edges **30, 32** being held securely within the channel defined between the slide rails **36, 38.**

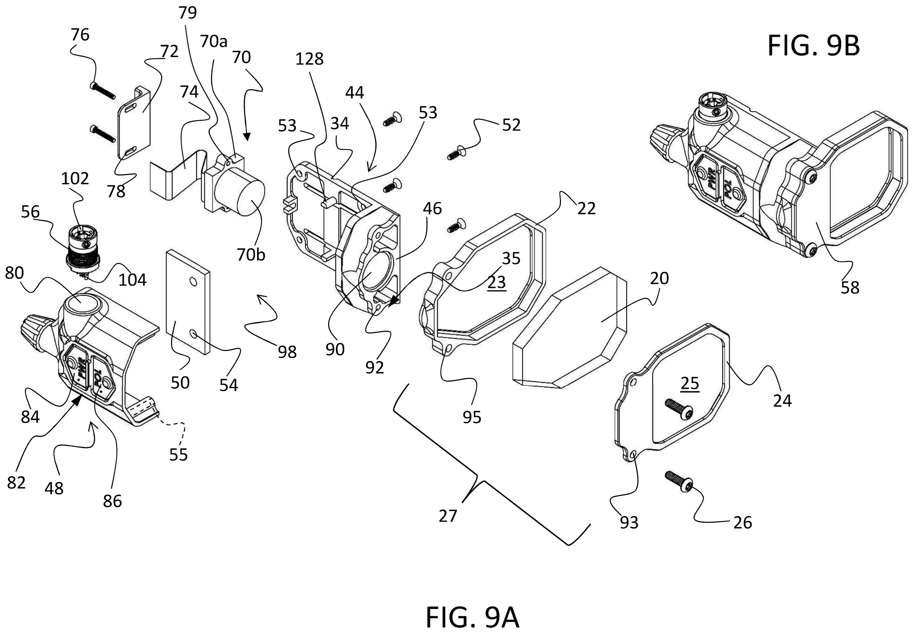

Referring to FIGS. 9A and 9B, exploded and isometric views, respectively, of the HUD subassembly **42** are provided. The HUD subassembly **42** includes the HUD chassis **44** and outer housing **48.** When the HUD chassis **44** and outer housing **48** are joined, as discussed below, an enclosure defining an interior space **98** is created therebetween. The HUD chassis **44** includes the chassis base portion **34,** which extends perpendicularly to a waveguide assembly attachment plate portion **46.** The waveguide **20** is received within a waveguide frame **22** having a central aperture **23** and is covered on the rearward side with a waveguide frame cover or bezel **24** having a central aperture **25** to define a waveguide assembly **27.**

The image projector **70** is disposed within the space **98** of the HUD subassembly **42.** An image projector **70** comprises a display element **70a** configured to generate an image from a light source and projection optical elements **70b** in optical communication with and configured to direct the image to the waveguide **20,** the waveguide **20** being substantially transparent. The display **70b** may be any suitable display, such as a light emitting diode (LED) display, organic LED (OLED) display, laser display, liquid crystal display (LCD), micro-electro-mechanical system (MEMS) display, and the like. The waveguide **20** is an optical medium and may be formed of a material such as glass or plastic configured to guide light via internal reflection. The waveguide **20** may further include comprises optical elements such as micro-prisms, diffractive optical elements (DOEs), reflective coatings, filters, dichroic coatings, and the like, configured to manipulate light rays output by the image projector **70** by selectively reflecting or refracting it at controlled angles.

The reflected image light exits the waveguide and is directed toward the eye of the user, thereby creating a superimposed image of the display **70a** output in the user's field of view. Because the waveguide **20** is substantially transparent, it allows the user to simultaneously view the virtual image output from the image projector **70** and the image viewed through the NVD eyepiece.

In embodiments, a heat sink **72** comprising a thermally conductive material is thermally coupled to the display image projector **70** and is configured to dissipate heat generated by the image projector **70** during operation. In the illustrated embodiment, threaded fasteners **76** pass through clearance openings **78** in the heat sink **72** and clearance openings **79** in the image projector **70** and threadably engage openings **92** in the waveguide assembly attachment plate **46.** Threaded fasteners **26** pass through clearance openings **93** in the waveguide frame cover **24** and clearance openings **95** in the waveguide frame **22** and threadably engage the openings **92** in the waveguide assembly attachment plate **46.** In embodiments, the image projector **70** and the components of the waveguide assembly **27** may be attached to the waveguide assembly attachment plate **46** through other common means, as would be recognized by one skilled in the art. In certain embodiments, processing electronics on the circuit board **50** may also be thermally coupled to a heat sink for heat dissipation/thermal management. In embodiments, processing electronics on the circuit board **50** are thermally coupled to the chassis **44** for heat dissipation/thermal management.

In embodiments, the waveguide assembly attachment plate **46** includes a projector aperture **90** through which the image projection optics **70b** are disposed so as to facilitate optical communication with the waveguide **20.** Processing electronics for the HUD system **10** reside on a circuit board **50.** The processing electronics are configured to generate and output display control signals for driving the display **70a.** The processing electronics may include a controller operable to receive and process image input data and generate corresponding signals configured to render the image on the display **70b.** The processing electronics may further include an associated memory for storing display content and power regulation components for supplying power to the display **70b.** The circuit board **50** is secured in position in the chassis base portion **34** within the space **98** by mounting bosses **128** passing through aligned opening **54** in the circuit board **50.** The image projector **70** is coupled to the circuit board **50** by an electrical connector **74,** such as a ribbon cable, flex circuit, or other electrical connection means.

The image projector **70** is disposed between the waveguide assembly attachment plate **46** and the heat sink **72.** In embodiments, the heat sink **72** is held in place with respect to the waveguide assembly attachment plate **46** by threaded fasteners **76** which pass through clearance openings **78** in the heat sink **72,** clearance openings **79** in the image projector **70** and threadably engage openings **92** in the waveguide assembly attachment plate **46.** In embodiments, the image projector **70** is held in position within the space **98,** relative to the waveguide **20** through other common means, as would be recognized by one skilled in the art.

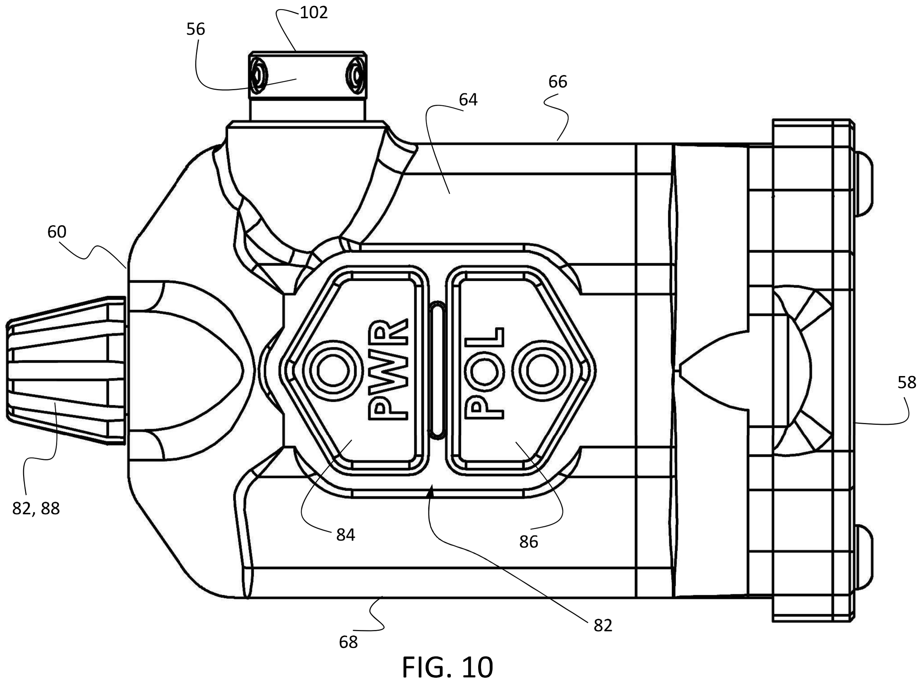

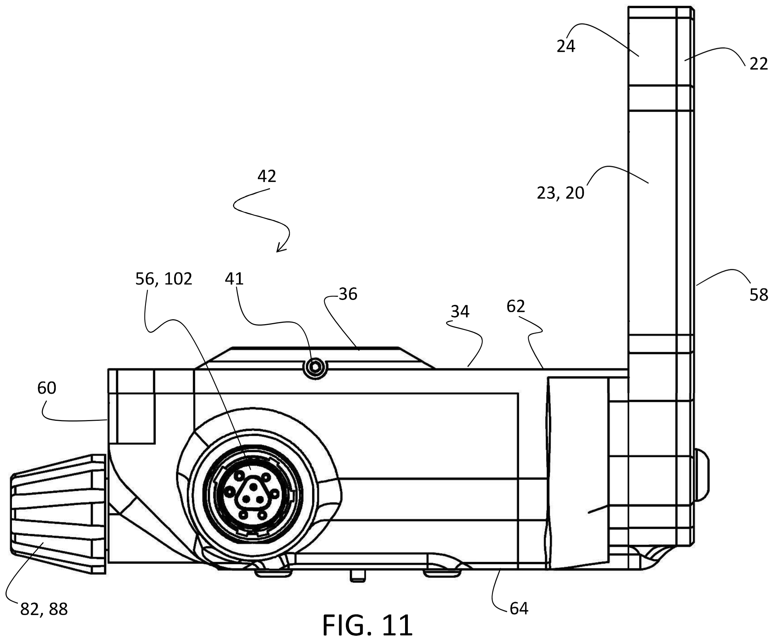

The outer housing **48** includes at least one user control **82,** as discussed with reference to FIGS. 10 and 11 below.

In embodiments, the HUD chassis **44** and outer housing **48** are attached to one another by threaded fasteners **52** which pass through clearance openings **53** in the HUD chassis base portion **34** and threadably engage with aligned openings **55** in the outer housing shell **48.** In embodiments, a circuit board **50** is mounted to the chassis included between the HUD chassis **44** and the outer housing **48.** It is understood that threaded fasteners **52** are but one way in which the HUD chassis **44** and outer housing **48** are united. In alternative embodiments, the HUD chassis **44** and outer housing **48** snap, click, or slide together. In further embodiments, the HUD chassis **44** and outer housing **48** are a single integrated structure that does not require attachment.

In embodiments, the HUD system **10** includes a power and data port **56.** The power and data port **56** is in operative electronic communication with the circuit board **50,** which, in turn, is operatively coupled to the image projector **70.** The circuit board **50** is also coupled to a user control assembly **82** which may comprise one or more manually actuatable keys, buttons, switches, or the like for controlling operation of the HUD system **10.** In embodiments, the power and data port **56** allows for transmission of data and control signals into and out of the HUD system **10.** In embodiments as shown, the power and data port **56** comprises an electrical connector that extends out of a power and data port through an opening or aperture **80** in the outer housing **48** and includes an exterior or protruding portion **102** that is accessible from an exterior of the HUD system **10** and an interior portion **104** that is disposed in the space **98** and is in communication with the circuit board **50.** In embodiments, the circuit board **50** may include an RF transceiver configured to wirelessly receive data, such as data representative of information and/or images for display by the image projector **70.**

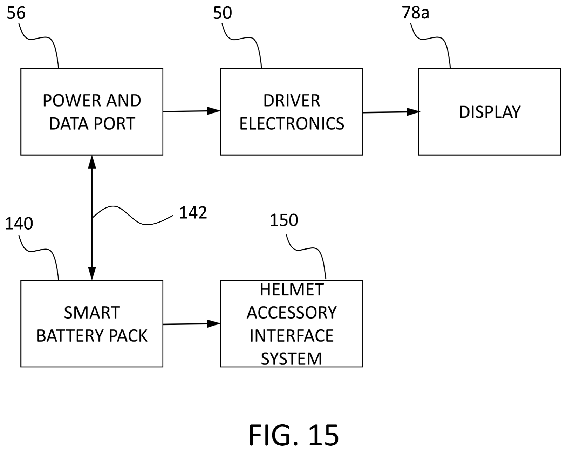

Referring to FIGS. 10 and 11, views of the external-facing side **64** and the top **66** of the HUD subassembly **42** are provided, respectively. In embodiments, the outer housing **48** includes the user control or assembly **82.** In the illustrated embodiment, the user control assembly **82** includes a power button **84** for powering the HUD system **10** on and off and an additional user input button **86.** In embodiments, the additional user button **86** is a programmable button. Exemplary programmable functions include cycling among mission modes, declutter function, sleep functional, and others. In embodiments, the additional user input button **86** programmable function may be configured to initiate a user-defined or user-selectable function. In embodiments, data representative of the user-selected function is stored in a memory of a smart battery pack **140** (see FIG. 15), wherein the additional user input button **86** function is programmed when the device **42** is operably connected to the smart battery pack **140.** The smart battery pack **140,** in turn, may be operably coupled to a helmet accessory interface system for attachment of helmet-mounted accessory devices.

In embodiments, a selection knob **88,** such as a rotary selection knob, is provided on the outer housing **48** for selecting a desired display mode, selecting information or images to be displayed by the display unit **70,** and so forth. In embodiments, the selection knob **88** is configured to navigate through menu options of a graphical user interface rendered on the HUD **42.** In embodiments, the selection knob **88** is operable to adjust HUD gain, cycle through mission display modes, or can serve as a general-purpose, user-remappable input for smart battery pack operations. In embodiments, the selection knob is configured to perform one of a plurality of user-selectable functions. In embodiments, the user-selected function is determined in accordance with mapping data stored in a memory associated with the smart battery pack **140.**

In the illustrated embodiment, the selection knob **88** is implemented using a rotary switch although other configurations, such as slider switches, buttons, toggle switches, and the like are also contemplated. It is understood that in embodiments, the user controls **82** may be disposed elsewhere on the outer housing **48.** In further embodiments, user controls may be input remotely or wirelessly, such as through an associated application on a mobile device, e.g., a device paired with the HUD system **10** via Bluetooth or other wireless communication interface.

Referring to FIG. 10, the power and data port **56** extends from or is otherwise accessible on the top portion **66.** The selection knob **88** is disposed on and extends from the front surface **60.** The power button **84** and polarity button **86** are disposed on the external-facing side **64.** Referring to FIG. 11, the upper slide rail **36** is disposed on the chassis base portion **34.** The waveguide assembly **27** extends perpendicularly from the rearward end of the chassis base portion **34.** A power and data cable (not shown) may be detachably coupled to the power and data port **56.** In embodiments, the power and data port **56** comprises a female circular multipin electrical connector, such as a ruggedized circular interconnect, including but not limited to a Fischer style connector. The power and data port **56** is configured to detachably couple to a power and data cable **142** having a complementary mating circular multipin connector. In embodiments, other types of connector types for the power and data port **56** are contemplated.

In embodiments, as best seen in FIG. 15, the power and data cable **142** operably couples the power and data port **56** to the smart battery pack **140,** which, in addition to supplying power to operate the unit **42,** can additionally provide visual data and processing capabilities.

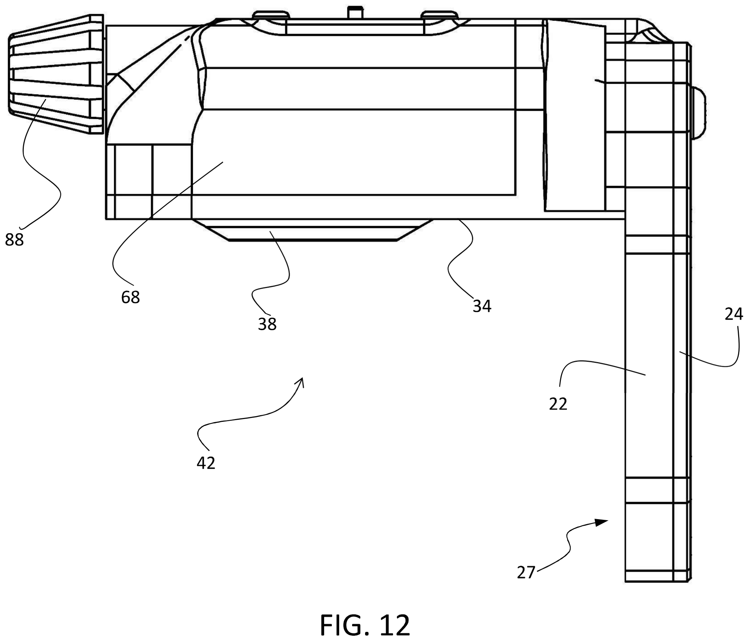

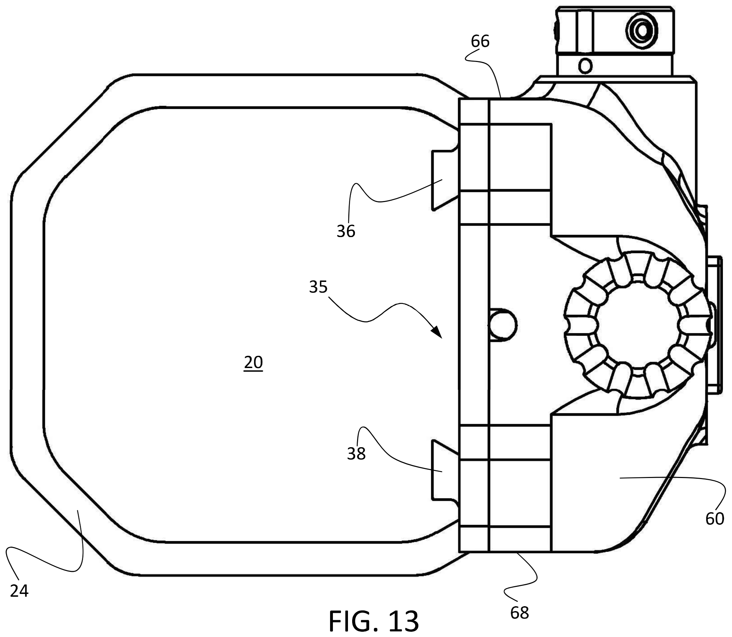

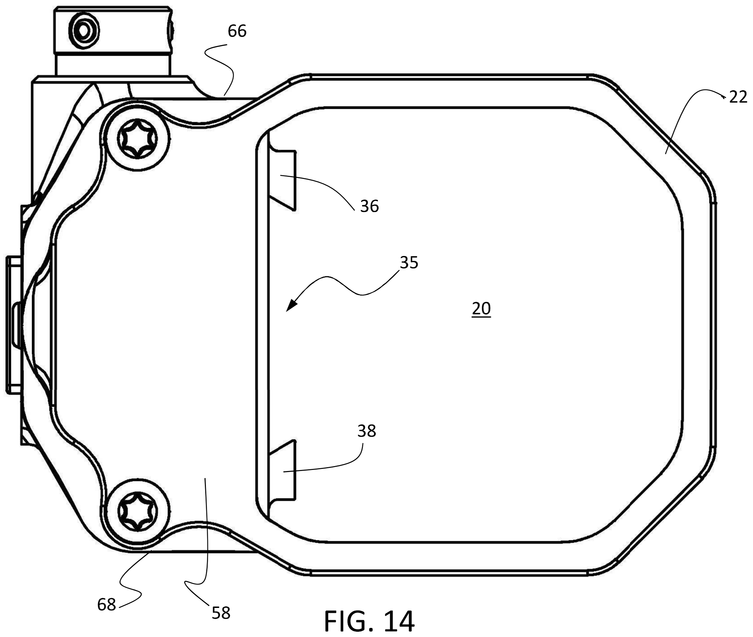

Referring to FIG. 12, a view of the bottom **68** of the HUD subassembly **42** is provided. The lower slide rail **38** is disposed on the chassis base portion **34.** Now referring to FIGS. 13 and 14, views of the front **60** and rear **58** of the HUD subassembly **42** are provided, respectively. The upper and lower slide rails **36, 38** are shown clearly, illustrating the channel **35** into which the mounting shoe **28** slides.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims or the equivalents thereof.

## Claims

1. A head-up display (HUD) system for use with a viewing device having at least one monocular unit, the HUD system comprising:
a mounting bracket subassembly removably attachable to the at least one monocular unit of the viewing device;
a HUD subassembly comprising:
an image projector comprising a display and projection optics;
display control electronics operatively coupled to the display and configured to control visual output of the display; and
a waveguide assembly in optical communication with the image projector and configured to direct at least a portion of the visual output of the display into a line of sight of a user.

2. The HUD system as claimed in claim 1, further comprising an attachment means for connecting the mounting bracket subassembly and the HUD subassembly.

3. The HUD system as claimed in claim 2, wherein the attachment means comprises a mounting shoe configured to engage a complementary receptacle on the HUD subassembly.

4. The HUD system as claimed in claim 2, wherein the attachment means for securely connecting the mounting bracket subassembly and the HUD subassembly comprises:
a mounting shoe disposed on the mounting bracket subassembly; and
a chassis base portion with opposing slide rails thereon defining a mounting shoe receptacle configured for detachably coupling the mounting shoe.

5. The HUD system as claimed in any of the preceding claims, wherein the mounting bracket subassembly comprises first and second clamping pieces configured to fit snugly around a housing of the at least one monocular unit.

6. The HUD system as claimed in claim 5, wherein:
the mounting bracket subassembly further comprises opposing split ring members secured with threaded fasteners.

7. The HUD system as claimed in claim 6, wherein the opposing split ring members one or more axially extending channels configured to receive one or more complementary axially extending splines disposed the housing of the at least one monocular unit, the one or more axially extending channels being configured to inhibit relative rotational movement between the HUD system and the at least one monocular unit.

8. The HUD system as claimed in any of the preceding claims, wherein the HUD subassembly further comprises:
a chassis comprising a base portion extending in an axial direction and a waveguide attachment plate extending from the base portion in a transverse direction; and
a waveguide frame assembly configured to position the waveguide along a viewing axis of the at least one monocular unit.

9. The HUD system as claimed in claim 8, wherein:
the HUD subassembly further comprises a power and data port comprising an exterior portion and an interior portion;
the outer housing further comprises a power and data port aperture; and
the power and data port is disposed through the power and data port aperture such that the exterior portion of the power and data port is accessible from an exterior of the HUD system and the interior portion of the power and data port is disposed within the space and is to facilitate electronic data communication and to supply electrical power to the display and the display control electronics.

10. The HUD system as claimed in claim 8, wherein:
the waveguide assembly attachment plate of the chassis comprises a projector aperture; and
the image projection optics are received in the projector aperture such that the image projector is in optical communication with the waveguide.

11. The HUD system as claimed in claim 10, further comprising:
a heat sink disposed within the space and thermally coupled to the image projector.

12. The HUD system as claimed in claim 8, wherein the waveguide assembly comprises a waveguide frame and a waveguide frame cover securing the waveguide therebetween.

13. The HUD system as claimed in any of the preceding claims, wherein the HUD subassembly further comprises an outer housing shell attached to the chassis base portion to define an interior space, wherein the image projector and the display control electronics are disposed within the interior space.

14. The HUD system as claimed in any of the preceding claims, further comprising one or both of:
a power and data port configured to facilitate electronic data communication and to supply electrical power to the display and the display control electronics; and
at least one user control in electrical communication with the display control electronics.

15. The HUD system as claimed in any of the preceding claims, further comprising at least one user control selected from the group consisting of:
a power control;
power polarity control;
a selection knob in electrical communication with the display control electronics and which is configured to perform a function selected from the group consisting of adjusting a setting, selecting a desired display mode, navigating a menu, selecting information and/or images to be displayed by the display; and
a selection knob in electrical communication with the display control electronics and which is configured to perform one of a plurality of user-selectable functions.
